# EUROPEAN PATENT SPECIFICATION

(11) **EP 3 578 333 B1**
(45) Date of publication and mention of the grant of the patent: **07.06.2023**
(21) Application number: 18748469.6
(22) Date of filing: 31.01.2018
(51) Int. Cl.: B29C 45/77, B29C 45/23

(54) **INJECTION MOLDING MACHINE**
SPRITZGIESSMASCHINE
MACHINE DE MOULAGE PAR INJECTION

(30) Priority: 31.01.2017 JP 2017016341
(43) Date of publication of application: 11.12.2019
(73) Proprietor: Sumitomo Heavy Industries, Ltd., Tokyo 141-6025 (JP)
(72) Inventor: MOROZUMI, Tomohito, Chiba-shi Chiba 263-0001 (JP); OGISO, Taro, Chiba-shi Chiba 263-0001 (JP); SASAKI, Jun, Chiba-shi Chiba 263-0001 (JP)
(74) Representative: Walcher, Armin
(86) International application number: PCT/JP2018/003263
(87) International publication number: WO 2018/143291

(56) References cited:
- DE-A1- 2 405 361
- GB-A- 1 070 887
- JP-A- S61 266 215
- JP-A- S61 266 215
- JP-A- 2012 232 558
- JP-A- 2012 232 558
- JP-U- S54 120 580

## Description

### Technical Field

The present invention relates to an injection molding machine.

### Background Art

An injection molding machine described in PTL 1 has a shut-off nozzle which can be opened and closed by a needle valve at a top portion of a cylinder in order to prevent a molten resin in the cylinder from leaking out when a mold is opened or the like. As a method of driving the needle valve, there are a straight cam type driving method, a direct acting type driving method, a lever type driving method, or the like. In any method, the needle valve is moved forward or rearward, a force of an actuator is used when closing the needle valve, and a resin pressure generated when injecting a resin is used when opening the needle valve (refer to paragraph 0004 in PTL 1).

Moreover, it is known to block or unblock the movement of a valve body during an injection process (cf. PTL 2, PTL 3).

### Citation List

### Patent Literature

[PTL 1] Japanese Unexamined Patent Publication No. 2002-292683
[PTL 2] Japanese Publication No. JP 2012 232558 A
[PTL 3] Japanese Publication No. JP S61 266215 A.

### Summary of Invention

### Technical Problem

In a nozzle, a flow path of a molding material such as a resin is formed, and the nozzle includes a valve body which can be moved between an open position at which the valve body opens the flow path and a closed position at which the valve body closes the flow path. A movement direction of the valve body may be an axial direction of the nozzle or a direction orthogonal to the axial direction of the nozzle.

In the related art, a pressure of a molding material generated in a filling process is used so as to move the valve body from the closed position to the open position, and the pressure of the molding material generated in the filling process is large. Accordingly, a momentum to move the valve body is too strong, and thus, the valve body or a valve body movement mechanism which moves the valve body may be damaged by impact.

The present invention is made in consideration of the above-described problems, and an object thereof is to provide an injection molding machine capable of reducing impact caused by the movement of the valve body which opens or closes the flow path of the molding material in the nozzle.

### Solution to Problem

In order to achieve the object, an injection molding machine as set out in the appended set of claims is provided.

According to an aspect of the present invention, there is provided an injection molding machine including: a nozzle which injects a molding material into a mold unit; a flow path opening/closing mechanism which opens or closes a flow path of the molding material in the nozzle; a cylinder having a front end portion in which the nozzle is provided; a screw which is disposed to be rotatable and movable forward or rearward inside the cylinder; a drive source which drives the screw; and a control unit which controls the flow path opening/closing mechanism and the drive source, in which the flow path opening/closing mechanism includes a valve body which is moved between an open position at which the valve body opens the flow path and a closed position at which the valve body closes the flow path, and a valve body movement mechanism which performs an operation of moving the valve body located at the open position to the closed position to fix the valve body at the closed position and an operation of releasing fixing of the valve body located at the closed position to enable a
movement of the valve body to the open position by a pressure of the molding material accumulated inside the nozzle, and after a plasticizing process of accumulating the molding material in a front portion of the cylinder starts and before a filling process of filling an inside of the mold unit with the molding material accumulated in the front portion of the cylinder, the control unit executes a control of releasing the fixing of the valve body located at the closed position to enable the movement of the valve body to the open position by the pressure of the molding material accumulated inside the nozzle.

### Advantageous Effects of Invention

According to an aspect of the present invention, an injection molding machine capable of reducing impact caused by the movement of the valve body which opens or closes the flow path of the molding material in the nozzle is provided.

### Brief Description of Drawings

Fig. 1 is a diagram showing a state when a mold opening of an injection molding machine according to an embodiment is completed.
Fig. 2 is a diagram showing a state when a mold of the injection molding machine according to the embodiment is clamped.
Fig. 3 is a diagram showing a state where an oscillating lever shown in Fig. 5 is oscillated in a first direction and a valve body is moved from an open position shown in Fig. 5 to a closed position.
Fig. 4 is a diagram showing a state where the oscillating lever shown in Fig. 3 is oscillated in a second direction.
Fig. 5 is a diagram showing a state where the valve body shown in Fig. 4 is moved from the closed position to the closed position by a pressure of the molding material.
Fig. 6 is a diagram showing timings of processes performed by an injection unit, operations of the oscillating lever, and operations of the valve body according to an embodiment.
Fig. 7 is a graph showing a time change of a pressure detected by a pressure detector according to an embodiment.

### Description of Embodiments

Hereinafter, an embodiment of the present invention will be described with reference to the drawings. In each drawing, the same or corresponding reference signs are assigned to the same or corresponding configurations, and descriptions thereof are omitted.

### (Injection Molding Machine)

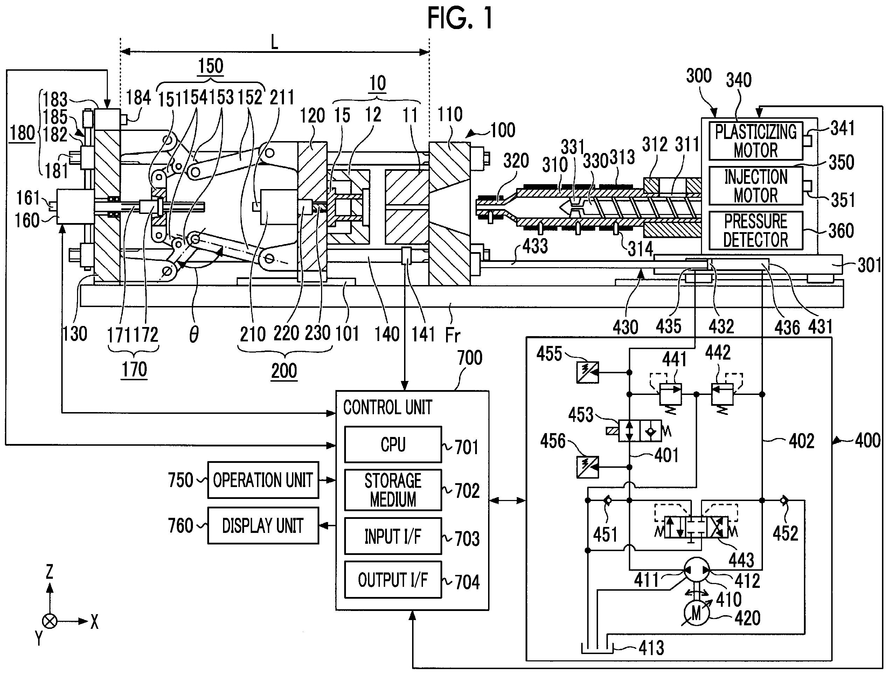

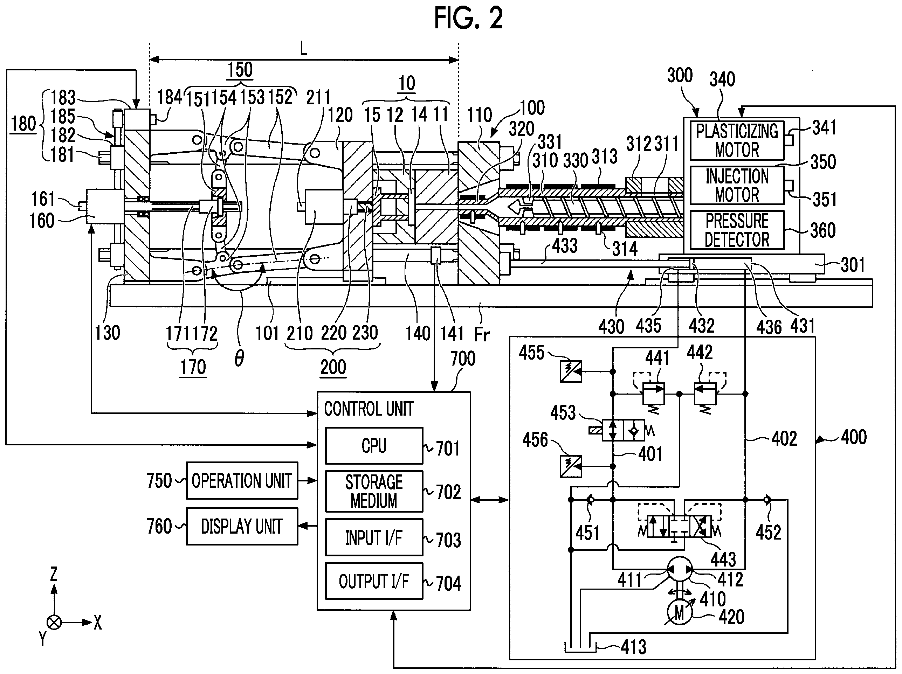

Fig. 1 is a diagram showing a state when a mold opening of an injection molding machine according to an embodiment is completed. Fig. 2 is a diagram showing a state when a mold of the injection molding machine according to the embodiment is clamped. In Figs. 1 and 2, an X direction, a Y direction, a Z direction are directions perpendicular to each other. Each of the X direction and the Y direction indicates a horizontal direction and a Z direction indicates a vertical direction. In a case where a mold clamping unit 100 is a horizontal type mold clamping unit, the X direction is mold opening and closing directions, and the Y direction is a width direction of the injection molding machine. As shown in Figs. 1 and 2, the injection molding machine includes the mold clamping unit 100, an ejector unit 200, an injection unit 300, a movement unit 400, a control unit 700, and a frame Fr. Hereinafter, each component of the injection molding machine will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is opened is defined as a rear side.

The mold clamping unit 100 performs closing, clamping, and opening on a mold unit 10. For example, the mold clamping unit 100 is the horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 moves forward or rearward with respect to the stationary platen 110, and thus, closing, clamping, and opening of the mold are performed. The mold unit 10 includes the stationary mold 11 and the movable mold 12.

The toggle support 130 is connected with a gap from the stationary platen 110, and is placed on the frame Fr to be movable in mold opening and closing directions. In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the control unit 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillatable by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the control unit 700.

In the mold closing process, the mold clamping motor 160 is driven to move the crosshead 151 forward to a mold closing completion position at a set speed. Accordingly, the movable platen 120 moves forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends a signal indicating the detection result to the control unit 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 (refer to Fig. 2) is filled with a liquid molding material by the injection unit 300. A filled molding material is solidified, and thus, a molding product can be obtained. A plurality of cavity spaces 14 may be provided, and in this case, a plurality of molding products can be simultaneously obtained.

In the mold opening process, the mold clamping motor 160 is driven to move the crosshead 151 rearward from the mold opening start position to a mold opening completion position at a set speed. Accordingly, the movable platen 120 moves rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, the speed or positions (including mold closing start position, speed switching position, mold closing completion position, and mold clamping position) of the crosshead 151 and the mold clamping force in the mold closing process and the mold clamping process are collectively set as a series of setting conditions. The mold closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set. Setting conditions are similarly set in the mold opening process. For example, the speed or positions (including mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position and the mold clamping position may be the same as each other. In addition, the mold opening completion position and the mold closing start position may be the same as each other. In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle **θ** (hereinafter, also referred to a "link angle **θ**") between the first link 152 and the second link 153. The link angle **θ** is obtained from the position of the crosshead 151. When the link angle **θ** is 180°, the toggle magnification becomes the maximum value.

In a case where a space of the mold unit 10 is changed by an exchange of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle **θ** of the toggle mechanism 150 at the time of a touch type where the movable mold 12 comes into contact with the stationary mold 11 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably held by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drives gears is rotatably held by a center portion of the toggle support 130. In addition, the rotation transmission portion 185 may include a belt, a pulley, or the like instead of the gear.

An operation of the mold space adjustment mechanism 180 is controlled by the control unit 700. The control unit 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 may be rotatably held by the toggle support 130 and the tie bar 140 on which the screw shaft 181 is formed is fixed to the stationary platen 110. However, the present invention is not limited to this.

For example, the screw nut 182 may be rotatably held by the stationary platen 110 and the tie bar 140 may be fixed to the toggle support 130. In this case, it is possible to adjust the gap L by rotating the screw nut 182.

In addition, the screw nut 182 may be fixed to the toggle support 130 and the tie bar 140 may be held rotatably by the stationary platen 110. In this case, it is possible to adjust the gap L by rotating the tie bar 140.

In addition, the screw nut 182 may be fixed to the stationary platen 110 and the tie bar 140 may be held rotatably by the toggle support 130. In this case, it is possible to adjust the gap L by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the control unit 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In the mold space adjustment mechanism 180, the gap L is adjusted by rotating one of the screw shaft 181 and the screw nut 182 which are screwed to each other. A plurality of the mold space adjustment mechanisms 180 may be used, and a plurality of the mold space adjustment motors 183 may be used.

In addition, in the present embodiment, the mold space adjustment mechanism 180 includes the screw shaft 181 which is formed on the tie bar 140 and the screw nut 182 which is screwed to the screw shaft 181 in order to adjust the gap L. However, the present invention is not limited to this.

For example, the mold space adjustment mechanism 180 may have a tie bar temperature controller which adjusts a temperature of the tie bar 140. The tie bar temperature controller is attached to each tie bar 140, and the temperatures of the plurality of tie bars 140 are adjusted to be in conjunction with each other. As the temperature of the tie bar 140 increases, the tie bar 140 is lengthened by thermal expansion, and thus, the gap L increases. The temperatures of the plurality of tie bars 140 can be adjusted independently.

For example, the tie bar temperature controller includes a heating unit such as a heater and adjusts the temperature of the tie bar 140 by heating. The tie bar temperature controller includes a cooler such as a water cooling jacket and may adjust the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are the horizontal direction. However, the mold clamping unit 100 may be a vertical type mold clamping unit in which the mold opening and closing directions are the upward-downward direction. The vertical type mold clamping unit has a lower platen, an upper platen, a toggle support, a tie bar, a toggle mechanism, a mold clamping motor, or the like. One of the lower platen and the upper platen is used for a stationary platen, and the other one is used for a movable platen. A lower mold is attached to the lower platen and an upper mold is attached to the upper platen. The upper mold and the lower mold constitutes a mold unit. The lower mold may be attached to the lower platen via a rotary table. The toggle support is disposed below the lower platen and is connected to the upper platen via the tie bar. The tie bar connects the upper platen and the toggle support with a gap therebetween in the mold opening and closing directions. The toggle mechanism is disposed between the toggle support and the lower platen and lifts and lowers the movable platen. The mold clamping motor operates the toggle mechanism. In a case where the mold clamping unit is the vertical type mold clamping unit, in general, the number of the tie bars is three. In addition, the number of the tie bars is not limited to three.

In addition, the mold clamping unit 100 of the present embodiment has the mold clamping motor 160 as a drive source. However, the mold clamping unit 100 may have a hydraulic cylinder instead of the mold clamping motor 160. Moreover, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 15 which is disposed to be movable forward or rearward inside the movable mold 12. The front end portion of the ejector rod 230 may be connected to the movable member 15 or may not be connected to the movable member 15.

The ejector unit 200 performs an ejection process under the control of the control unit 700.

In the ejection process, the ejector motor 210 is driven to move the ejector rod 230 forward from a standby position to an ejection position at a set speed, and thus, the movable member 15 moves forward and the molding product is ejected. Thereafter, the ejector motor 210 is driven to move the ejector rod 230 rearward at a set speed, and thus, the movable member 15 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the control unit 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and the cavity space 14 inside the mold unit 10 is filled with the molding material by the injection unit 300. For example, the injection unit 300 includes a cylinder 310, a nozzle 320, a screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (a right-left direction in Figs. 1 and 2) of the cylinder 310. The heating unit 313 and the temperature detector 314 are provided in each zone. The control unit 700 controls the heating unit 313 such that a detection temperature of the temperature detector 314 becomes a set temperature for each zone.

The nozzle 320 is provided on the front end portion of the cylinder 310 and presses the mold unit 10. The heating unit 313 and the temperature detector 314 are provided on an outer periphery of the nozzle 320. The control unit 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 10 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a closed position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the closed position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a pressure transmitted between the injection motor 350 and the screw 330. The pressure detector 360 is provided on a transmission path of the force between the injection motor 350 and the screw 330 and detects the pressure applied to the pressure detector 360.

The pressure detector 360 sends a signal indicating a detection result to the control unit 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the control unit 700.

In the plasticizing process, the plasticizing motor 340 is driven to rotate the screw 330 at a set rotational speed and the molding material is fed forward along the spiral grooves of the screw 330 by the screw 330. According to this, the molding material is gradually melted. The screw 330 moves rearward as the liquid molding material is fed to the front side of the screw 330 and is accumulated in the front portion of the cylinder 310. For example, the rotational speed of the screw 330 is detected using a plasticizing motor encoder 341. The plasticizing motor encoder 341 detects the rotation of the plasticizing motor 340 and sends a signal indicating a detection result to the control unit 700. In addition, a screw rotational speed detector which detects the rotational speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the control unit 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the control unit 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

In addition, in the filling process, after the position of the screw 330 reaches the set position, the screw 330 may be temporarily stopped at the set position, and thereafter, the V/P switching may be performed. Immediately before the V/P switching, instead of the screw 330 being stopped, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends a signal indicating a detection result to the control unit 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by a solidified molding material. This state is referred to a gate seal and a backflow of the molding material from the cavity space 14 is prevented. A cooling process starts after the holding pressure process. In the cooling process, solidification of the molding material in the cavity space 14 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder. Moreover, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is the upward-downward direction. The mold clamping unit combined with the vertical type first injection unit 300 may be a vertical type mold clamping unit or a horizontal type mold injection unit. Similarly, the mold clamping unit combined with the horizontal type first injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during the plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank 413 and can discharge the working liquid from any one of the first port 411 and the second port 412.

The motor 420 operates the hydraulic pump 410. The motor 420 drives the hydraulic pump 410 in the rotation direction corresponding to a control signal from the control unit 700 and by the rotation torque corresponding to the control signal from the control unit 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which is a first chamber and a rear chamber 436 which is a second chamber. The piston rod 433 is fixed to the stationary platen 110. The piston rod 433 penetrates the front chamber 435, and thus, a cross sectional area of the front chamber 435 is smaller than a cross sectional area of the rear chamber 436.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 11.

A first relief valve 441 is opened in a case where a pressure in the first flow path 401 exceeds a set value, an excess working liquid in the first flow path 401 is returned to the tank 413, and thus, the pressure in the first flow path 401 is maintained to be equal to or less than the set value.

A second relief valve 442 is opened in a case where a pressure in the second flow path 402 exceeds a set value, an excess working liquid in the second flow path 402 is returned to the tank 413, and thus, the pressure in the second flow path 402 is maintained to be equal to or less than the set value.

A flushing valve 443 is a valve which adjusts excess or deficiency of a circulating amount of the working liquid due to a difference between the cross sectional area of the front chamber 435 and the cross sectional area of the rear chamber 436, and as shown in Figs. 1 and 2, the flushing valve 443 is constituted by a three-position/four-port spool valve.

A first check valve 451 is opened when the pressure in the first flow path 401 is lower than a pressure in the tank 413 to supply the working liquid from the tank 413 to the first flow path 401.

A second check valve 452 is opened when the pressure in the second flow path 402 is lower than the pressure in the tank 413 to supply the working liquid from the tank 413 to the second flow path 402.

An electromagnetic switching valve 453 is a control valve which controls a flow of the working liquid between the front chamber 435 of the hydraulic cylinder 430 and the first port 411 of the hydraulic pump 410. For example, the electromagnetic switching valve 453 is provided in the middle of the first flow path 401 and controls the flow of the working liquid in the first flow path 401.

For example, the electromagnetic switching valve 453 is constituted by a two-position/two-port spool valve as shown in Figs. 1 and 2. In a case where the spool valve is located at a first position (left position in Figs. 1 and 2), flows in both directions between the front chamber 435 and the first port 411 are allowed. Meanwhile, in a case where the spool valve is located at a second position (right position in Figs. 1 and 2), a flow from the front chamber 435 to the first port 411 is restricted. In this case, the flow from the first port 411 to the front chamber 435 is not restricted. However, the flow may be restricted.

A first pressure detector 455 detects a liquid pressure in the front chamber 435. Since the nozzle touch pressure is generated by the liquid pressure in the front chamber 435, it is possible to detect the nozzle touch pressure using the first pressure detector 455. For example, the first pressure detector 455 is provided in the middle of the first flow path 401, and is provided at a position on a side of the front chamber 435 with reference to the electromagnetic switching valve 453. It is possible to detect the nozzle touch pressure regardless of the state of the electromagnetic switching valve 453.

A second pressure detector 456 is provided in the middle of the first flow path 401, and is provided at a position on a side of the first port 411 with reference to the electromagnetic switching valve 453. The second pressure detector 456 detects the liquid pressure between the electromagnetic switching valve 453 and the first port 411. In a case where the electromagnetic switching valve 453 allows flows in both directions between the first port 411 and the front chamber 435, a liquid pressure between the first port 411 and the electromagnetic switching valve 453 is the same as a liquid pressure between the electromagnetic switching valve 453 and the front chamber 435. Thus, in this state, it is possible to detect the nozzle touch pressure using the second pressure detector 456.

Moreover, in the present embodiment, the nozzle touch pressure is detected using the pressure detector provided in the middle of the first flow path 401. However, for example, the nozzle touch pressure may be detected using a load cell or the like provided on the nozzle 320. That is, the pressure detector which detects the nozzle touch pressure may be provided in any one of the movement unit 400 and the injection unit 300.

Moreover, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Control Unit)

For example, the control unit 700 includes a computer, and as shown in Figs. 1 and 2, the control unit 700 includes a Central Processing Unit (CPU) 701, a storage medium 702 such as a memory, an input interface 703, and an output interface 704. The control unit 700 performs various controls by causing the CPU 701 to execute a program stored in the storage medium 702. In addition, the control unit 700 receives a signal from the outside through the input interface 703 and transmits a signal to the outside through the output interface 704. The control unit 700 repeatedly performs the mold closing process, the mold clamping process, the mold opening process, or the like to repeatedly manufacture the molding product. In addition, the control unit 700 performs the plasticizing process, the filling process, the holding pressure process, or the like between the mold clamping processes. A series of operations to obtain the molding product, for example, an operation from the start of the plasticizing process to the start of the next plasticizing process is also referred to as a "shot" or a "molding cycle". In addition, a time required for once shot is also referred to as a "molding cycle time". For example, the once mold cycle includes the plasticizing process, the mold closing process, the mold clamping process, the filling process, the holding pressure process, the cooling process, the mold opening process, and the ejection process in this order. Here, this order is an order of the start of each process. The filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process may be performed during the cooling process of the previous molding cycle, and in this case, the mold closing process may be performed at an initial stage of the molding cycle. In addition, the filling process may start during the mold closing process. Moreover, the ejection process may be started during the mold opening process. In a case where an on/off valve for opening or closing a flow path of the nozzle 320, the mold opening process may be started during the plasticizing process. Accordingly, even when the molding opening process starts during the plasticizing process, the molding material does not leak from the nozzle 320 if the on/off valve closes the flow path of the nozzle 320.

The control unit 700 is connected to an operation unit 750 or a display unit 760. The operation unit 750 receives an input operation from a user and outputs a signal corresponding to the input operation to the control unit 700. The display unit 760 displays an operation screen corresponding to the input operation in the operation unit 750, under the control of the control unit 700. The operation screen is used for the setting of the injection molding machine or the like. A plurality of operation screens are provided, and thus, are displayed to be switched or to overlap each other. The user operates the operation unit 750 while viewing the operation screen displayed on the display unit 760 to perform the setting (including an input of a set value) of the injection molding machine or the like. For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be independently provided. In addition, a plurality of operation units 750 may be provided.

### (Opening or Closing of Nozzle of Injection Unit)

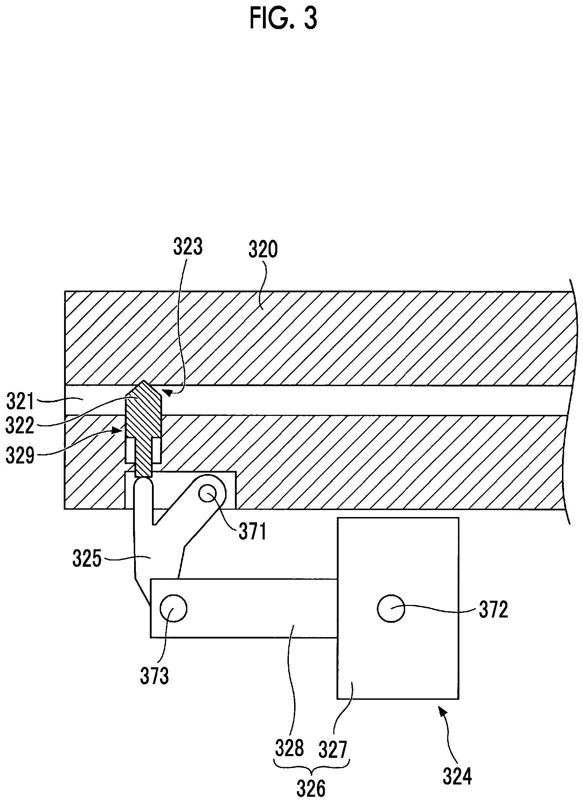

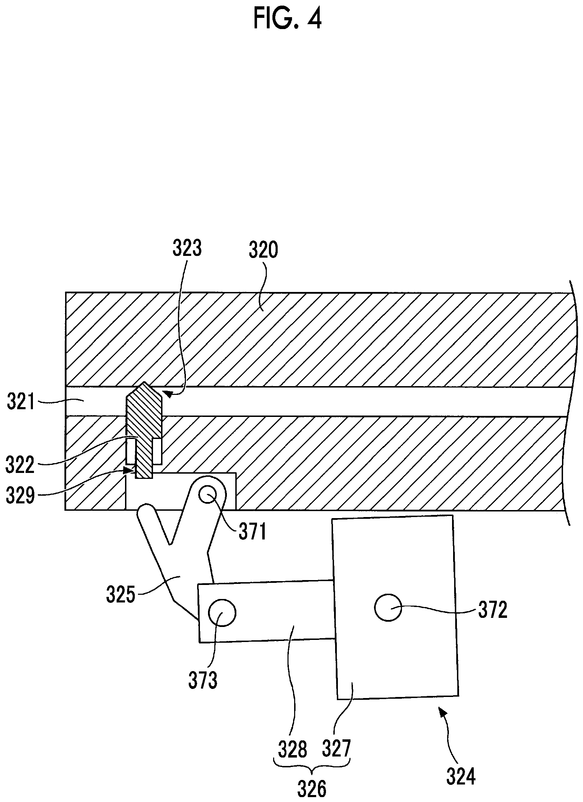

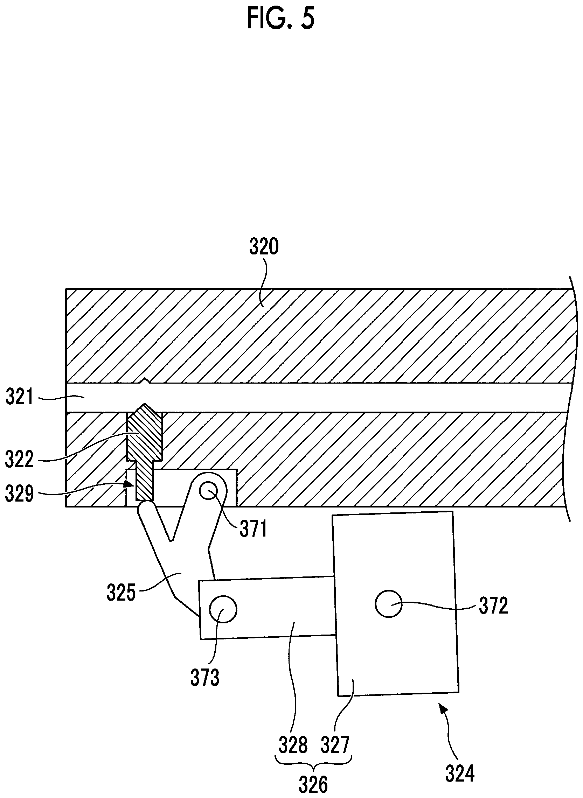

Fig. 3 is a diagram showing a state where an oscillating lever shown in Fig. 5 is oscillated in a first direction (clockwise direction) and a valve body is moved from an open position shown in Fig. 5 to a closed position. Fig. 4 is a diagram showing a state where the oscillating lever shown in Fig. 3 is oscillated in a second direction (for example, counterclockwise direction) . Fig. 5 is a diagram showing a state where the valve body shown in Fig. 4 is moved from the closed position to the closed position by a pressure of the molding material generated in the plasticizing process.

The injection unit 300 includes a flow path opening/closing mechanism 329 which opens and closes a flow path 321 of the molding material in the nozzle 320. The flow path opening/closing mechanism 329 has a valve body 322 which is moved between an open position (refer to Fig. 5) at which the valve body opens the flow path 321 and a closed position (refer to Fig. 3) at which the valve body opens the flow path 321. When the valve body 322 is in the closed position, a wedge-shaped gap 323 tapered toward a front side may be formed between the valve body 322 and a wall surface of the flow path 321. When a pressure of the molding material in the wedge-shaped gap 323 becomes sufficiently large, the valve body 322 overcomes an adhesive force of the molding material and is moved from the closed position to the open position.

A movement direction of the valve body 322 may be a direction orthogonal to an axial direction of the nozzle 320, and may be a radial direction of the flow path 321 of the nozzle 320. In addition, in the present embodiment, the movement direction of the valve body 322 is the direction orthogonal to the axial direction of the nozzle 320. However, the movement direction of the valve body 322 may be the axial direction of the nozzle 320 similarly to the related art. However, in a case where the movement direction of the valve body 322 is the axial direction of the nozzle 320, the valve body 322 is located inside the flow path 321 not only when the valve body 322 is located at the closed position but also when the valve body 322 is located at the open position, and thus, a diameter of the flow path 321 is narrowed by a size of the valve body. Meanwhile, according to the present embodiment, since the valve body 322 moves outward from an inside of the flow path 321 when the valve body 322 moves from the closed position to the open position, the molding material can easily pass through the nozzle in the filling process, a flow resistance of the molding material in the nozzle 320 can be reduced in the filling process, and heat generation of the molding material can be suppressed. Therefore, a time of the cooling process can be shortened, and the molding cycle can be shortened.

In addition, in the present embodiment, the movement direction of the valve body 322 is the direction orthogonal to the axial direction of the nozzle 320. However, the movement direction of the valve body 322 may be the axial direction of the nozzle 320 similarly to the related art.

The flow path opening/closing mechanism 329 has a valve body movement mechanism 324 which moves the valve body 322 between the open position and the closed position. The valve body movement mechanism 324 performs an operation which moves the valve body 322 located at the open position to the closed position and fixes the valve body 322 at the closed position, and an operation which releases the fixing of the valve body 322 in the closed position to enable the valve body 322 to move to the open position of the valve body 322 by a pressure of the molding material accumulated inside the nozzle 320. For example, the valve body movement mechanism 324 has an oscillating lever 325 which is attached to be oscillatable to the nozzle 320 and abuts against the valve body 322, and a fluid pressure cylinder 326 which oscillates the oscillating lever 325 in the first direction (clockwise direction in Figs. 3 to 5) in which the valve body 322 moves from the open position to the closed position and the second direction (counterclockwise direction in Figs. 3 to 5) which is a direction opposite to the first direction and in which the fixing of the valve body 322 located at the closed position is released.

The oscillating lever 325 can oscillate around an oscillating shaft 371 fixed to the nozzle 320 and is oscillated by extension and shrinkage of the fluid pressure cylinder 326. The oscillating lever 325 comes into contact with the valve body 322 but is not linked to the valve body 322.

The fluid pressure cylinder 326 has a cylinder body 327 and a piston rod 328 which is moved by a pressure of a fluid supplied to the inside of the cylinder body 327. A proximal end portion of the piston rod 328 is connected to a piston which slides inside the cylinder body 327. The piston divides an inside of the cylinder body 327 into two chambers. By supplying the pressure to any one of the chambers, the piston is moved, and thus, the piston rod 328 is moved.

The cylinder body 327 can oscillate around an oscillating shaft 372 which is fixed to the nozzle 320. Meanwhile, the piston rod 328 is connected to be oscillatable to the oscillating lever 325 by a pin 373. In addition, dispositions of the cylinder body 327 and the piston rod 328 may be reversed. That is, the cylinder body 327 may be connected to the oscillating lever 325 by the pin 373 and the piston rod 328 may be oscillatable around the oscillating shaft 372.

As shown in Fig. 5, if the fluid pressure cylinder 326 extends in a state where the valve body 322 is located at the open position, the oscillating lever 325 is oscillated in the first direction (for example, clockwise direction). Accordingly, the valve body 322 is pushed by the oscillating lever 325, moved to the closed position as shown in Fig. 3, and is fixed at the closed position by the pressure of the fluid pressure cylinder 326.

Meanwhile, as shown in Fig. 3, if the fluid pressure cylinder 326 is shrunk in a state where the valve body 322 is located at the closed position, the oscillating lever 325 is oscillated in the second direction (that is, counterclockwise direction) opposite to the first direction. Accordingly, the oscillating lever 325 is returned to an original position as shown in Fig. 4 and does not disturb the movement of the valve body 322 from the closed position to the open position. Therefore, the fixing of the valve body 322 located at the closed position is released, and the valve body 322 can move to the open position by the pressure of the molding material accumulated inside the nozzle 320.

Therefore, the valve body 322 is moved from the closed position shown in Fig. 4 to the open position shown in Fig. 5 by the pressure of the molding material in the wedge-shaped gap 323. The movement of the valve body 322 from the closed position to the open position may be performed simultaneously with the oscillation of the oscillating lever 325 in the second direction, or may be performed later than the oscillation of the oscillating lever 325 in the second direction.

Moreover, in the present embodiment, a driving force of the fluid pressure cylinder 326 is used to oscillate the oscillating lever 325 in the second direction and return the oscillating lever 325 to the original position. However, it is also possible to use the pressure of molding material generated in the plasticizing process. In this case, instead of supplying a pressure to the fluid pressure cylinder 326, the control unit 700 relieves a pressure from the fluid pressure cylinder 326, allowing inflow and outflow of the fluid between the two chambers partitioned by the piston and an outside thereof. For example, in a case where the fluid pressure cylinder 326 is a pneumatic cylinder, the two chambers partitioned by the pistons are open to the atmosphere. Accordingly, the piston can move freely in both directions. Therefore, the pressure of the molding material generated in the plasticizing process can be used to move the valve body 322 from the closed position to the open position, and push the oscillating lever 325 by the valve body 322 to oscillate the oscillating lever 325 in the second direction. In a case where the pressure of the molding material generated in the plasticizing process is used to return the oscillating lever 325 to the original position, the oscillating lever 325 and the valve body 322 may be connected to each other by a pin or the like.

The control unit 700 reciprocates the valve body 322 between the open position and the closed position during one shot (for example, from the start of the plasticizing process to the start of the next plasticizing process). For example, the valve body 322 is located at the open position in the filling process or the holding pressure process, and is located at the closed position at the time of the start of the plasticizing process. The valve body 322 is moved from the open position to the closed position after the holding pressure process is completed and before the plasticizing process starts. Moreover, the valve body 322 is moved from the closed position to the open position by the pressure of the molding material accumulated inside the nozzle 320 after the plasticizing process starts and before the filling process starts. The plasticizing process is a process of accumulating the molding material in the front portion of the cylinder 310. The start of the plasticizing process means start of an operation of the screw 330 for accumulating the molding material in the front portion of the cylinder 310. For example, the start of the plasticizing process is a start of a rotation of the screw 330. As the screw 330 rotates, the molding material is fed forward along spiral grooves of the screw 330, and thus, the screw 330 is moved rearward as the molding material is accumulated in the front portion of the cylinder 310. In addition, in the present embodiment, the start of the plasticizing process is the start of the rotation of the screw 330. However, the start of the plasticizing process may be start of a rearward movement of the screw 330. That is, in the plasticizing process, the screw 330 may be rotated after the screw 330 is moved rearward by a predetermined amount. If the screw 330 reaches a plasticizing completion position, the plasticizing process is completed, and the rotation and the rearward movement of the screw 330 are stopped. The filling process is a process of filling the inside of the mold unit 10 with the molding material accumulated in the front portion of the cylinder 310. The start of the filling process means the start of the operation of the screw 330 so as to fill the inside of the mold unit 10 with the molding material accumulated in the front portion of the cylinder 310. For example, the start of the filling process is a start of a forward movement of the screw 330. During the filling process, the screw 330 may not rotate. When the screw 330 reaches the V/P switching position, the filling process is completed and the holding pressure process is performed. In addition, the valve body 322 may be located at the closed position from the start of the plasticizing process to the completion of the plasticizing process, and may move from the closed position to the open position before the start of the filling process from the completion of the plasticizing process. In this case, it is possible to prevent the molding material from leaking from the nozzle 320 when the mold opening process starts after the plasticizing process starts and before the plasticizing process is completed.

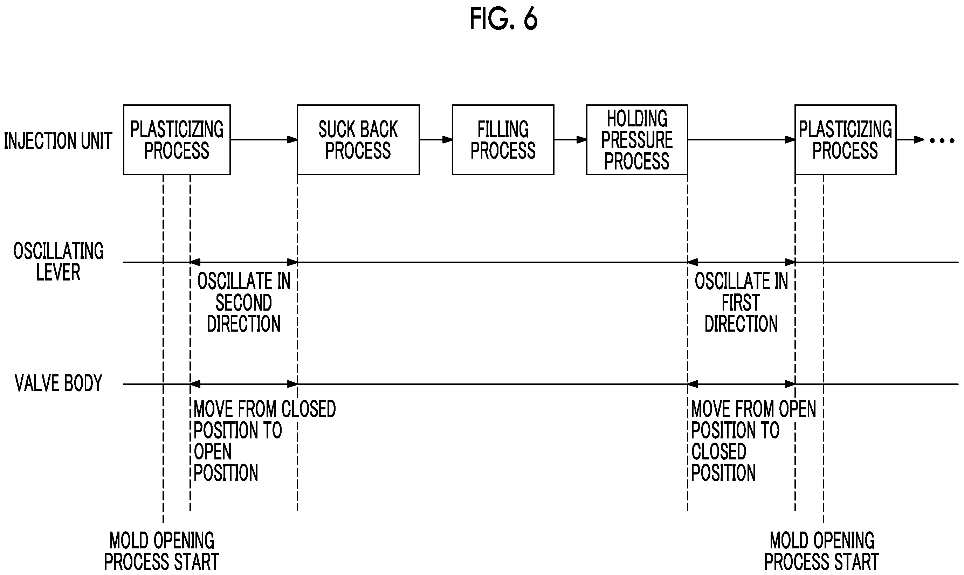

Fig. 6 is a diagram showing timings of processes performed by an injection unit, operations of the oscillating lever, and operations of the valve body according to the embodiment. As shown in Fig. 6, the injection unit 300 repeats the plasticizing process, a suck back process, the filling process, and the holding pressure process. The suck back process is a process of stopping the rotation of the screw 330 and moving the screw 330 rearward to reduce the pressure of the molding material accumulated in the front portion of the screw 330 after the plasticizing process is completed and before the filling process starts.

The control unit 700 supplies a pressure to the fluid pressure cylinder 326 to oscillate the oscillating lever 325 in the first direction at a preset timing, and pushes the valve body 322 by the oscillating lever 325 to move the valve body 322 from the open position to the closed position.

For example, as shown in Fig. 6, the oscillation of the oscillating lever 325 in the first direction is performed at a predetermined timing (for example, at the time of the completion of the holding pressure process or the like) before the start of the plasticizing process from the completion of the holding pressure process.

The movement of the valve body 322 from the open position to the closed position is performed by the oscillation of the oscillating lever 325 in the first direction. Therefore, the movement of the valve body 322 from the open position to the closed position may be performed simultaneously with the oscillation of the oscillating lever 325 in the first direction. The valve body 322 is fixed at the closed position by the pressure of the fluid pressure cylinder 326.

In addition, the oscillation of the oscillating lever 325 in the first direction and the movement of the valve body 322 from the open position to the closed position may be performed before the start of the mold opening process from the completion of the holding pressure process, and may be performed in the middle of the plasticizing process. After the holding pressure process is completed and before the mold opening process starts, the inside of the mold unit 10 is filled with the molding material, and thus, even when the plasticizing process is performed in a state where the flow path 321 is open, the molding material does not leak from the nozzle 320 which comes into contact with the mold unit 10.

In addition, the control unit 700 supplies a pressure to the fluid pressure cylinder 326 to oscillate the oscillating lever 325 in the second direction at a preset timing, and returns the oscillating lever 325 to the original position. Accordingly, the oscillating lever 325 does not disturb the movement of the valve body 322 from the closed position to the open position. Accordingly, the fixing of the valve body 322 located at the closed position is released, and the valve body 322 can be moved to the open position by the pressure of the molding material accumulated inside the nozzle 320.

For example, as shown in Fig. 6, the oscillation of the oscillating lever 325 in the second direction is performed at a predetermined timing (for example, immediately before the completion of the plasticizing process or at the time of the completion of the plasticizing process) before the start of the suck back process from the middle of the plasticizing process. In addition, in a case where the suck back process is not performed, the oscillation of the oscillating lever 325 in the second direction is performed at a predetermined timing before the start of the filling process from the middle of the plasticizing process.

The movement of the valve body 322 from the closed position to the open position is performed by the pressure of the molding material accumulated inside the nozzle 320, before the start of the filling process from the start of the plasticizing process . The valve body 322 is moved to the open position by the back pressure of the screw 330 or a residual pressure of the back pressure during the plasticizing process. Therefore, the movement of the valve body 322 from the closed position to the open position may be performed simultaneously with the oscillation of the oscillating lever 325 in the second direction, or may be performed later than the oscillation of the oscillating lever 325 in the second direction.

For example, as shown in Fig. 6, the movement of the valve body 322 from the closed position to the open position is performed at a predetermined timing before the start of the suck back process from the middle of the plasticizing process. In addition, in a case where the suck back process is not performed, the movement of the valve body 322 from the closed position to the open position is performed at a predetermined timing before the start of the filling process from the middle of the plasticizing process.

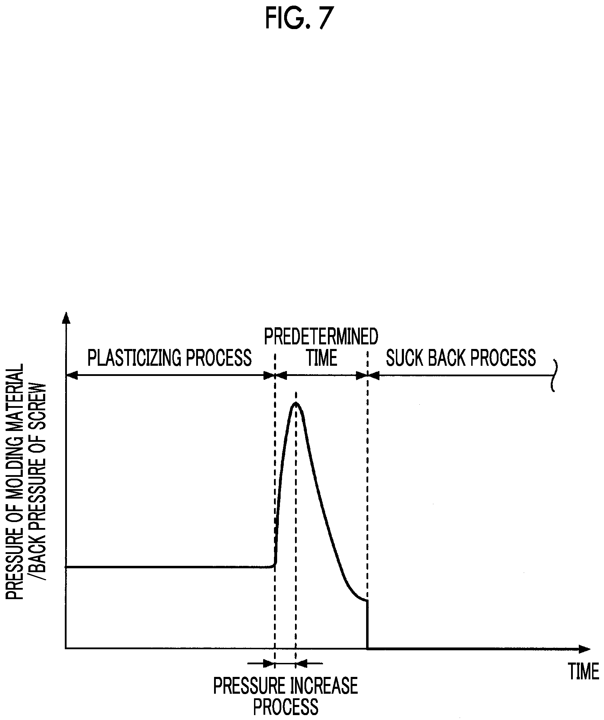

The control unit 700 may set a delay time having a predetermined time from the completion of the plasticizing process to the start of the suck back process. During this delay time, in order to move the valve body 322 from the closed position to the open position, as shown in Fig 7, a pressure increase process may be performed to increase the pressure of the molding material inside the nozzle 320. In the pressure increase process, the pressure of molding material in the inside of the nozzle 320 is higher than that of the plasticizing process. When an elapsed time from the completion of the plasticizing process reaches the delay time, the suck back process starts. When the suck back process starts, as described above, the pressure of molding material in the inside of the nozzle 320 decreases (refer to Fig. 7) . Therefore, in the present embodiment, the pressure increase step is performed after the plasticizing process is completed and before the suck back step starts. In addition, the suck back process may not be performed, and the pressure increase process may be performed after the plasticizing process is completed and before the filling process starts.

When the delay time is set before the start of the suck back process from the completion of the plasticizing process, even if the screw 330 stops at the plasticizing completion position, the molding material flows due to inertia, and thus, the pressure of the molding material increases as shown in Fig. 7. In addition, when it is detected that the screw 330 has reached the plasticizing completion position, the rotation and movement of the screw 330 are stopped. In a case where the rotation of the screw 330 is not stopped even when the movement of the screw 330 is stopped, the molding material is sent to the front portion of the screw 330, and thus, the molding material pressure increases.

A rearward movement speed of the screw 330 in the plasticizing process is lower than a forward movement speed of the screw 330 in the filling process. Therefore, the pressure of the molding material generated when the rearward movement is stopped is lower than the pressure of the molding material generated in the filling process.

Accordingly, the pressure of the molding material when the screw 330 is stopped at the plasticizing completion position is used so as to move the valve body 322 to the open position, and thus, it is possible to reliably move the valve body 322 to the open position while suppressing damage of the valve body 322 or the valve body movement mechanism 324.

If it is detected that the screw 330 reaches the plasticizing completion position in a state where the valve body 322 is located at the closed position, the oscillating lever 325 is oscillated in the second direction. Accordingly, it is possible to move the valve body 322 from the closed position to the open position by the pressure of the molding material when the screw 330 is stopped at the plasticizing completion position.

In addition, the suck back process may not be omitted, and the filling process may start after a predetermined time elapses after the screw 330 is stopped at the plasticizing completion position. In absence of a suck back process, a delay time may be provided from the completion of the plasticizing process to the start of the filling process. If the elapsed time from the completion of the plasticizing process reaches the delay time, the filling process starts.

The delay time from the completion of the plasticizing process to the start of the suck back process may be used as a waiting time for the valve body 322 to move from the closed position to the open position, or as described later, may be used as a time for processing of further increasing the pressure of the molding material in the front portion of the screw 330.

As described above, after the plasticizing process starts and before the filling process starts, the control unit 700 of the present embodiment releases the fixing of the valve body 322 located at the closed position, and thus, executes control capable of moving the valve body 322 to the open position by the pressure of the molding material accumulated inside the nozzle 320. Accordingly, the valve body 322 is moved from the closed position to the open position by the pressure of the molding material accumulated inside the nozzle 320 after the plasticizing process starts and before the filling process starts. The pressure of the molding material generated after the plasticizing process starts and before the filling process starts is lower than the pressure of the molding material generated in the filling process. This is because unlike the filling process, in the plasticizing process, the molding material is not injected from the nozzle 320. In addition, according to the present embodiment, the pressure of the molding material generated after the plasticizing process starts and before the filling process starts is used for the movement of the valve body 322 from the closed position to the open position. Accordingly, compared to a case where the pressure of the molding material generated in the filling process is used as in the related art, a momentum of the movement of the valve body 322 from the closed position to the open position can be suppressed, and damage of the valve body 322 or the valve body movement mechanism 324 caused by impact can be suppressed.

Meanwhile, the pressure of the molding material generated in the plasticizing process can be used after the plasticizing process is completed and before the suck back process starts. In the present specification, the completion of the plasticizing process means that the screw 330 is moved rearward to the set position by the rotation of the screw 330 and a predetermined amount of molding material is accumulated in the front portion of the screw 330.

Accordingly, after the plasticizing process is completed and before the valve body 322 moves from the closed position to the open position, the control unit 700 may stop the forward movement and rearward movement of the screw 330, rotate the screw 330 to feed the molding material to the front portion of the screw 330, and increase the pressure of the molding material in the front portion of the screw 330. The valve body 322 can be moved from the closed position to the open position using both the pressure of the molding material generated in the plasticizing process and the pressure of the molding material generated by the rotation of the screw 330 after the plasticizing process is completed. This is particularly effective in a case where the back pressure of the screw 330 is low in the plasticizing process. A rotation amount of the screw 330 after the plasticizing process is completed is adjusted so that the pressure of the molding material used to move the valve body 322 from the closed position to the open position is less than the set value. The rotation amount of the screw 330 is adjusted to suppress the damage of the valve body 322 and the valve body movement mechanism 324.

In addition, after the plasticizing process is completed and before the valve body 322 moves from the closed position to the open position, the control unit 700 may stop the rotation of the screw 330 and move the screw 330 forward to increase the pressure of the molding material in the front portion of the screw 330. The valve body 322 can be moved from the closed position to the open position using both the pressure of the molding material generated in the plasticizing process and the pressure of the molding material generated by the forward movement of the screw 330 after the plasticizing process is completed. This is particularly effective in a case where the back pressure of the screw 330 is low in the plasticizing process . A forward movement amount of the screw 330 after the plasticizing process is completed is adjusted so that the pressure of the molding material used to move the valve body 322 from the closed position to the open position is less than the set value. The forward movement amount of the screw 330 is adjusted to suppress the damage of the valve body 322 and the valve body movement mechanism 324.

Moreover, after the plasticizing process is completed and before the valve body 322 moves from the closed position to the open position, the control unit 700 may move the screw 330 forward and rotate the screw 330 to increase the pressure of the molding material in the front portion of the screw 330. The valve body 322 can be moved from the closed position to the open position using both the pressure of the molding material generated in the plasticizing process and the pressure of the molding material generated by the forward movement and rotation of the screw 330 after the plasticizing process is completed. This is particularly effective in a case where the back pressure of the screw 330 is low in the plasticizing process. The forward movement amount of the screw 330 after the plasticizing process is completed and the rotation amount of the screw after the plasticizing process is completed are adjusted so that the pressure of the molding material used to move the valve body 322 from the closed position to the open position is less than the set value. The forward movement amount and rotation amount of the screw 330 are adjusted to suppress the damage of the valve body 322 and the valve body movement mechanism 324.

### (Modification and Improvement)

Hereinbefore, the embodiment of the injection molding machine is described. However, the present invention is not limited to the above-described embodiment, and various modifications and improvements can be made within a scope of the appended claims.

### Reference Signs List

- 10:: mold unit
- 11:: stationary mold
- 12:: movable mold
- 300:: injection unit
- 310:: cylinder
- 320:: nozzle
- 321:: flow path
- 322:: valve body
- 324:: valve body movement mechanism
- 325:: oscillating lever
- 326:: fluid pressure cylinder
- 329:: flow path opening/closing mechanism
- 330:: screw
- 340:: plasticizing motor
- 350:: injection motor
- 700:: control unit

## Claims

1. An injection molding machine comprising:
a nozzle (320) which injects a molding material into a mold unit (10);
a flow path opening/closing mechanism (329) which opens or closes a flow path of the molding material in the nozzle (320) ;
a cylinder (310) having a front end portion in which the nozzle (320) is provided;
a screw (330) which is disposed to be rotatable and movable forward or rearward inside the cylinder (310);
a drive source which drives the screw (330); and
a control unit (700) which controls the flow path opening/closing mechanism (329) and the drive source,
wherein the flow path opening/closing mechanism (329) includes a valve body (322) which is moved between an open position at which the valve body (322) opens the flow path and a closed position at which the valve body (322) closes the flow path, and a valve body movement mechanism (324) which performs an operation of moving the valve body (322) located at the open position to the closed position to fix the valve body (322) at the closed position and an operation of releasing fixing of the valvebody (322) located at the closedposition to enable a movement of the valve body (322) to the open position by a pressure of the molding material accumulated inside the nozzle (320),
**characterized in that** the control unit (700) is configured to, after a plasticizing process of accumulating the molding material in a front portion of the cylinder (310) starts and before a filling process of filling an inside of the mold unit (10) with the molding material accumulated in the front portion of the cylinder (310) starts, execute a control of releasing the fixing of the valve body (322) located at the closed position, and after releasing the fixing of the valve body (322) and before starting the filling process, to rotate the screw (330) and/or move the screw (330) forward to increase the pressure of the molding material in front of the screw (330), and
that the control unit (700) is further configured to, after the plasticizing process is completed and before the valve body (322) moves from the closed position to the open position, adjust at least one of a rotation amount and a forward amount of the screw (330) so that the pressure of the molding material in front of the screw (330) is less than a set value.

2. The injection molding machine according to claim 1,
wherein the valve body movement mechanism (324) has an oscillating lever (325) which is attached to be oscillatable with respect to the nozzle (320) and abuts against the valve body (322), and a fluid pressure cylinder (326) which oscillates the oscillating lever (325) in a first direction in which the valve body (322) moves from the open position to the closed position and a second direction which is a direction opposite to the first direction and in which the fixing of the valve body (322) located at the closed position is released.

## Patentansprüche

1. Spritzgießmaschine, umfassend:
eine Düse (320), die ein Formmaterial in eine Formeinheit (10) einspritzt;
einen Strömungsweg-Öffungs-/Schließmechanismus (329), der einen Strömungsweg des Formmaterials in der Düse (320) öffnet oder schließt;
einen Zylinder (310), der einen vorderen Endabschnitt aufweist, in dem die Düse (320) vorgesehen ist;
eine Schnecke (330), die angeordnet ist, um im Inneren des Zylinders (310) drehbar und vorwärts oder rückwärts beweglich zu sein;
eine Antriebsquelle, die die Schnecke (330) antreibt; und
eine Steuereinheit (700), die den Strömungsweg-Öffungs-/Schließmechanismus (329) und die Antriebsquelle steuert,
wobei der Strömungsweg-Öffungs-/Schließmechanismus (329) einen Ventilkörper (322) enthält, der zwischen einer offenen Position, in der der Ventilkörper (322) den Strömungsweg öffnet, und einer geschlossenen Position, in der der Ventilkörper (322) den Strömungsweg schließt, bewegt wird und einen Ventilkörperbewegungsmechanismus (324), der einen Vorgang des Bewegens des Ventilkörpers (322) , der sich in der offenen Position befindet, in die geschlossene Position durchführt, um den Ventilkörper (322) in der geschlossenen Position zu fixieren, und einen Vorgang des Lösens von Fixierung des Ventilkörpers (322), der sich in der geschlossenen Position befindet, um eine Bewegung des Ventilkörpers (322) in die offene Position durch einen Druck des Formmaterials, das sich innerhalb der Düse (320) angesammelt hat, zu ermöglichen,
**dadurch gekennzeichnet, dass** die Steuereinheit (700) konfiguriert ist, nach Beginn eines Plastifizierungsprozesses zum Ansammeln des Formmaterials in einem vorderen Abschnitt des Zylinders (310) und vor Beginn eines Füllprozesses zum Befüllen eines Innenraums der Formeinheit (10) mit dem in dem vorderen Abschnitt des Zylinders (310) angesammelten Formmaterial, eine Steuerung zum Lösen der Fixierung des Ventilkörpers (322), der sich in der geschlossenen Position befindet, und nach Lösen der Fixierung des Ventilkörpers (322) und vor Starten des Füllprozesses, auszuführen, um die Schnecke (330) zu drehen und/oder die Schnecke (330) nach vorne zu bewegen, um den Druck des Formmaterials vor der Schnecke (330) zu erhöhen , und
dass die Steuereinheit (700) ferner konfiguriert ist, nachdem der Plastifizierungsprozess abgeschlossen ist und bevor sich der Ventilkörper (322) von der geschlossenen Position in die offene Position bewegt, mindestens einen von einem Drehbetrag und einem Vorwärtsbetrag der Schnecke (330) so anzupassen, dass der Druck des Formmaterials vor der Schnecke (330) kleiner als ein eingestellter Wert ist.

2. Spritzgießmaschine nach Anspruch 1,
wobei der Ventilkörperbewegungsmechanismus (324) einen Schwinghebel (325), der in Bezug auf die Düse (320) schwingfähig angebracht ist und an dem Ventilkörper (322) anliegt, und einen Fluiddruckzylinder (326) aufweist, der den Schwinghebel (325) in eine erste Richtung, in der sich der Ventilkörper (322) von der geöffneten Position in die geschlossene Position bewegt, und eine zweite Richtung, die eine der ersten Richtung entgegengesetzte Richtung ist und in der die Fixierung des in der geschlossenen Position befindlichen Ventilkörpers (322) gelöst wird, schwingt.

## Revendications

1. Une machine de moulage par injection comprenant :
une buse (320) qui injecte un matériau de moulage dans une unité de moule (10) ;
un mécanisme d'ouverture/de fermeture de trajet d'écoulement (329) qui ouvre ou ferme un trajet d'écoulement du matériau de moulage dans la buse (320) ;
un cylindre (310) ayant une partie d'extrémité avant dans laquelle la buse (320) est prévue ;
une vis (330) qui est disposée pour pouvoir tourner et se déplacer en marche avant ou en marche arrière à l'intérieur du cylindre (310) ; et
une source d'entraînement qui entraîne la vis (330) ; et
une unité de commande (700) qui pilote le mécanisme d'ouverture/de fermeture du trajet d'écoulement (329) et la source d'entraînement,
dans laquelle le mécanisme d'ouverture/de fermeture de trajet d'écoulement (329) comprend un corps de soupape (322) qui est déplacé entre une position ouverte dans laquelle le corps de soupape (322) ouvre le trajet d'écoulement et une position dermée dans laquelle le corps de soupape (322) ferme le trajet d'écoulement, et un mécanisme de déplacement de corps de soupape (324) qui effectue une opération de déplacement du corps de soupape (322) de la position ouverte vers la position fermée afin de fixer le corps de soupape (322) en position fermée et une opération de libération du corps de soupape (322) qui se trouve en position fermée afin de permettre un déplacement du corps de soupape (322) en position ouverte par une pression du matériau de moulage accumulé à l'intérieur de la buse (320),
**caractérisée en ce que** l'unité de commande (700) est configurée pour, après le démarrage d'un processus de plastification qui consiste à accumuler le matériau de moulage dans une partie avant du cylindre (310) et avant le démarrage d'un processus de remplissage qui consiste à remplir un intérieur de l'unité de moule (10) avec le matériau de moulage accumulé dans la partie avant du cylindre (310), exécuter une commande de libération du corps de soupape (322) qui se trouve en position fermée, et, après la libération du corps de soupape (322) et avant le démarrage du processus de remplissage, faire tourner la vis (330) et/ou déplacer la vis (330) en marche avant afin d'augmenter la pression du matériau de moulage en face de la vis (330), et
**en ce que** l'unité de commande (700) est en outre configurée pour, après le processus de plastification et avant le passage du corps de soupape (322) de la position fermée à la position ouverte, ajuster au moins l'une d'une quantité de rotation et d'une quantité de marche avant de la vis (330) de sorte que la pression du matériau de moulage en face de la vis (330) soit inférieure à une valeur définie.

2. La machine de moulage par injection selon la revendication 1,
dans laquelle le mécanisme de déplacement du corps de soupape (324) possède un levier oscillant (325) qui est fixé de façon à pouvoir osciller par rapport à la buse (320) et qui bute contre le corps de soupape (322), et un cylindre de pression de fluide (326) qui fait osciller le levier oscillant (325) dans une première direction dans laquelle le corps de soupape (322) passe de la position ouverte à la position fermée et une seconde direction qui est une direction opposée à la première direction et dans laquelle le corps de soupape (322) qui se trouve en position fermée est libéré.
